Europäisches Patentamt

European Patent Office

Office européen des brevets

(19)

(11) Publication number: **0 362 155**
**A2**

(12) # EUROPEAN PATENT APPLICATION

(21) Application number: **89830405.0**

(22) Date of filing: **21.09.89**

(51) Int. Cl.5: **G21C 1/02** , **G21C 15/02** , **G21C 15/18**

(30) Priority: **27.09.88 IT 1255588**

(43) Date of publication of application:
**04.04.90 Bulletin 90/14**

(84) Designated Contracting States:
**BE DE FR GB**

(71) Applicant: **ANSALDO S.p.A.**
**Piazza Carignano 2**
**I-16128 Genoa(IT)**

(72) Inventor: **Cinotti, Luciano**
**Piazza Rossetti 15/5**
**I-16129 Genoa(IT)**

(74) Representative: **Galletti di San Cataldo, Vettor, Dr.**
**Via XX Settembre 36**
**I-16121 Genova(IT)**

(54) **Intermediate exchanger of a fast reactor, equipped with a raised upper tube plate, intake siphon and emergency input window.**

(57) This invention refers to a solution for an intermediate exchanger for fast reactors, with a tube bundle of straight tubes, primary sodium outside the tubes, a raised upper plate, a suction siphon, and equipped with a second intermediate input window for emergency access of the primary sodium into the exchanger in the event of failure of the feed system through the upper window.

According to the invention, said emergency input window is created by a suitable number of holes in the outer ring of the exchanger, and is positioned at a suitable height to guarantee hydraulic connection between the hot and cold headers under any circumstances.

According to a preferred embodiment of the invention, and in order to prevent an excessive share of the primary flow from entering through the emergency window rather than through the nominal input window, thus reducing the effective heat exchange length to the detriment of the thermal power achievable, an extension of the siphon as far as the emergency window is envisaged, shaping the siphon in a suitable manner.

Fig 3

## Intermediate exchanger of a fast reactor, equipped with a raised upper tube plate, intake siphon and emergency input window

The subject matter of this invention consists of an intermediate heat exchanger for a fast nuclear reactor, equipped with a raised tube plate, an intake siphon and an emergency input window.

Budget reasons and the need to reduce radial dimensions have led to the creation of heat exchangers with raised upper plates and input windows no longer immersed in the hot header but located above the nominal level of the sodium in normal operating conditions. These exchangers according to known solutions call for the adoption of suitable active or passive systems for feeding the upper window, i.e. intake siphons.

The purpose of this invention is to provide an exchanger having a raised upper tube plate with a passive system capable of ensuring hydraulic functionality of the exchanger - which is an indispensable hydraulic connection between the hot and cold headers - so as to allow circulation of the primary sodium even in the highly unlikely but possible event of a common cause of breakdown and consequent unavailability of the feed system, i.e. failure of the gas-extraction system or cracking of the pipe.

The invention is explained in detail below and illustrated with reference to forms of embodiment chosen by way of example only in the attached drawings.

Figure 1 is a schematic cross-section of a traditional intermediate exchanger.

Figure 2 is a schematic cross-section of a known type of intermediate exchanger of the type with a raised upper tube plate and an intake siphon, also of a traditional type.

Figure 3 refers to an intermediate heat exchanger of the type with a raised upper tube plate, an emergency window and an intake siphon, implemented according to this invention.

For the sake of simplicity equivalent elements in the different figures are indicated by the same reference numbers. Each of the above figures illustrates an intermediate heat exchanger, indicated as a whole as 100.

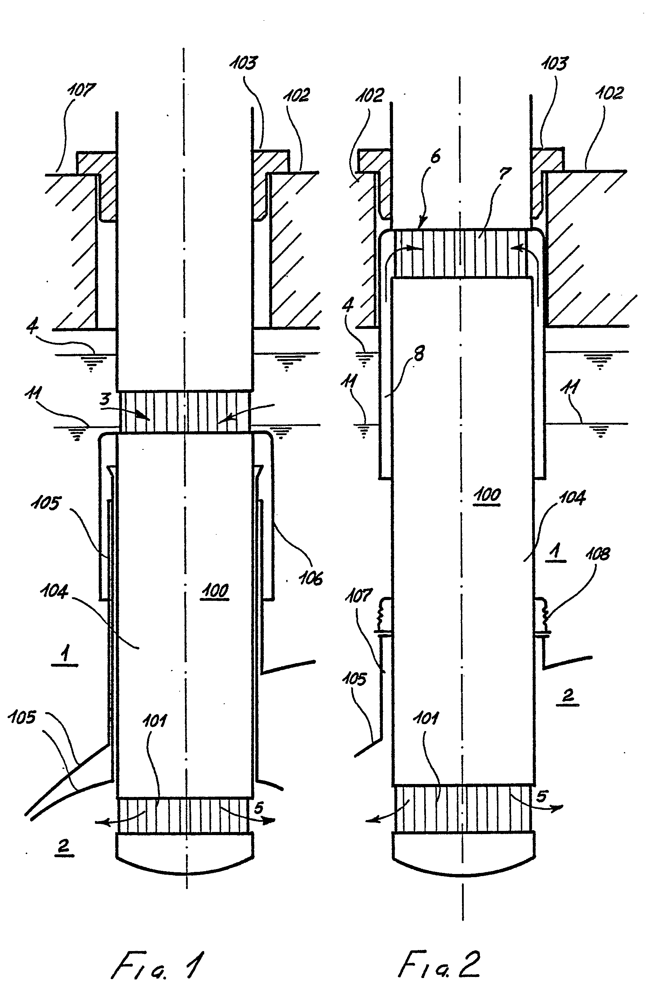

The heat exchanger 100 consists of a tube bundle 101, formed by a series of basically U-shaped tubes, through which the secondary sodium runs. This sodium is heated at the expense of the primary sodium contained in the vessel of the nuclear reactor of which only the ceiling 102 is shown in the figures. The primary sodium is represented in figures 1 to 3 by the two levels 4 and 11, corresponding to the two possible operating conditions of the reactor, as explained in detail below.

Each exchanger is fitted with an upper tube plate 6 and is supported from the ceiling 102 of the nuclear reactor by means of supports schematically represented in the figures by the flanged ring 103. The tube bundle 101 is surrounded by a cylindrical shell 104, which serves to convey the flow of primary sodium. Said shell 104 has an upper window 3 through which the primary sodium enters and a lower window 5 through which it leaves.

The heat exchanger 100 also crosses through several baffle plates 105 which divide up the space inside the vessel of the nuclear reactor into two chambers having different temperatures and forming the upper "hot" header 1 and the lower "cold" header 2 of the primary sodium circulating inside the exchanger 100.

In figure 1, said baffle plates 105 extend around the cylindrical shell 104 in the form of jackets which act as heat shields. Since these jackets 105 acting as heat shields are open at the top, they allow a slight but constant flow of primary sodium from the "cold" header 2 to the "hot" header 3. The circulation of said cooling fluid acting on the outer surfaces of the shell 104 is controlled with the aid of the siphon 106, mentioned here in order to stress its functional difference as compared to the siphons present in the heat exchangers of the subsequent figures.

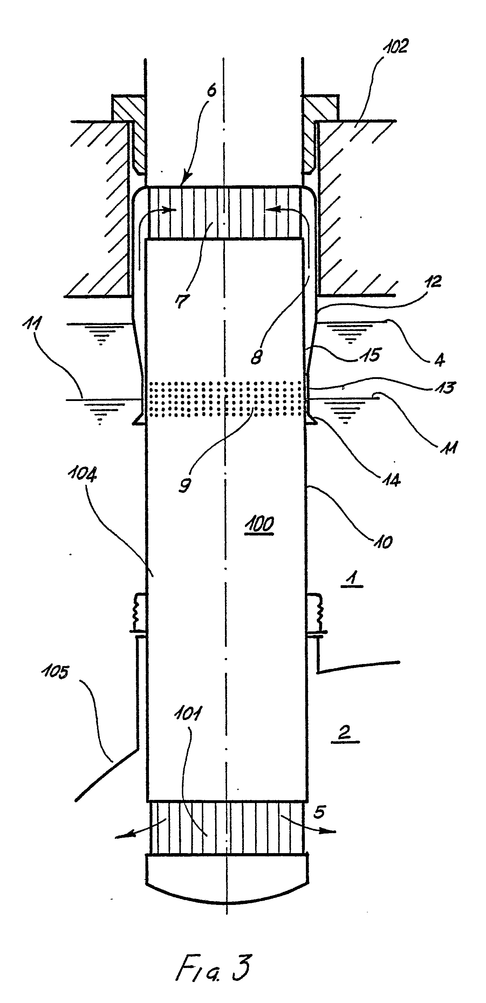

In figures 2 and 3 the baffle plate 105 separating the cold header 2 from the hot header 1 is only one, and encloses the shell 104 by means of a jacket 107 and an expansion joint 108.

As already mentioned, the solutions currently adopted as per figure 1, for example, for intermediate exchangers, call for the exchanger to be arranged astride between the hot header 1 and the cold header 2, with an input window 3 located in the hot header 1 below the nominal level 4 of the sodium in normal working conditions and a lower output window 5, located in the cold header 2. The hot primary sodium leaving the core enters the intermediate exchangers through the input window 3, gives up heat to the secondary sodium inside the tube bundle, and leaves the cold header 2 through the lower output window 5.

The primary pumps impose a pressure on the cold sodium and convey it through special pipes below the grid supporting the fuel elements forming the core. The primary sodium had the function of extracting the thermal power from the core and transferring it in the intermediate exchangers to the secondary sodium. The pumps give the primary sodium sufficient head to overcome the pressure drops of the whole circuit.

The intermediate exchangers are the only hydraulic connection between the hot header 1 and the cold header 2, and for this reason they must be designed in such a way that there is no possibility of hypothetical accidental situations in which any common causes of failure of the exchangers themselves might prevent hydraulic connection between the two headers 1 and 2, cutting off the core. The known heat exchanger illustrated in figure 1 also allows natural circulation of the primary sodium through windows 3 and 5, even when the level of the sodium drops from position 4 to position 11, a situa tion which could arise under emergency conditions.

Moreover, the heat exchanger illustrated in figure 1 has a limited height and therefore in order to increase its heat exchange surface area, it would require relatively large radial dimensions, not shown in the figures which, as stated above, are only schematic illustrations. Increasing the radial dimensions of the exchanger would inevitably affect the radial dimensions and consequently the cost of the whole nuclear reactor. The need to increase the heat exchange surface area without increasing the radial dimensions of the component makes it necessary to lengthen the tubes of the bundle.

In order to ensure natural circulation of the primary sodium inside the core, it is necessary not to lower the upper edge of the lower window 5. This requirement prevents lengthening of the exchanger downwards, that is to say towards the bottom of the vessel in which it is housed, and means that it is necessary to raise the height of the upper tube plate 6. The upper input window 7 is thus located above the nominal level 4 of the primary sodium in normal operating conditions (figure 2).

In order to enable the sodium to enter the exchanger, a feeding system capable of raising the local level of the sodium in the vicinity of the window 7 is necessary, by means of a suitable depression created and dynamically maintained by means of an active or passive system. By means of a suitable depression, said suction system creates a rise in the level of the sodium inside a siphon 8, allowing the exchanger to be fed through the upper input window 7.

But there is a safety problem. Failure of the feeding system causes a functional failure of the component, and it is not possible to exclude an accident condition in which some common cause of failure of the feeding systems would be able to put the exchangers out of service, insulating the core from a thermal point of view.

It is therefore necessary to develop a built-in device capable of guaranteeing hydraulic functionality of the exchangers in order to ensure an efficient hydraulic connection between the hot and cold headers 1 and 2 under any circumstances. According to this invention, said device consists of a second input window 9, having the function of an emergency window.

According to a preferred embodiment of the invention, said window 9 consists of a suitable number of circumferential arrays of suitably-shaped radial holes made in the outer ring 10 of the exchanger. Said window 9 must also be located at a suitable height so that at least one array of holes remains below level 11 of the sodium at 400°C even if the main vessel is holed. Similarly, the shaped ring 12 which constitutes the siphon 8 must also be extended at least to that height.

A hydraulic analysis of the exchanger with its function deactivated suggests that the holes made in the outer ring 10 must be of the "low pressure drop" type, with reference to the incoming flow, so as to limit the primary pressure drop in the event that 100% of the primary flow has to pass through the emergency window 9. These holes are made adequately conical, so as to limit the pressure drops concentrated on the output. The number and diameter of the holes and the radial extension of window 9 must be determined with the aim of a hydraulic optimization of the exchanger.

The thermo-hydraulic objective in normal running conditions and with the siphon available for use is to ensure that most of the primary flow entering the siphon 8 can reach the nominal upper input window 7 without entering the emergency input window 9, so as to avoid what would be a reduction in the effective heat exchange length, limiting the thermal power of the exchanger and placing heavy thermal loads on the tube bundle.

According to the invention, this is achieved by shaping in a suitable manner the ring 12 forming the siphon 8 at the height of the emergency window 9. The increase in kinetic energy inside the narrowed cross-section 13 allows the sodium to reach the upper window 7 without taking the path through emergency window 9. The shaped ring 12 will be characterized by three different portions:
- a first converging portion 14, leading into the siphon 8.
- a narrowed cross-section 13, extending for the whole height of emergency window 9.
- a diverging portion 15, downstream from the emergency window 9, for recovery of the pressure. The converging portion 14 must be shaped in such a way as to reach a compromise between the need to reduce the pressure drops at the entrance and the need for economicity of construction. The narrowed cross-section 13 must extend axially for the whole length of the window 9. The geometry of the portion with the narrowed cross-section must be designed with the aim of reducing to zero the net flow rate through the emergency window 9 in normal working conditions, so that normally practically the whole primary flow is directed towards the upper window 7.

The axial extension of the emergency window 9 must also be as small as possible, to limit local recirculation phenomena as described below.

The sodium inside the siphon 8 and the sodium inside the exchanger have opposite axial flow speeds, the first flowing from the bottom upwards to reach the upper input window 7, and the second from the top downwards towards from the upper nominal input window 7 towards the lower output window 5. In order to understand these phenomena, it is advisable first to consider two hypotheses:
- emergency window 9 at a negligible height.
- no net flow rate through the emergency window 9 in normal running conditions.

In this case, at the height of emergency window 9 the sodium would have the same pressure outside the siphon 8 and inside the exchanger. If the height of the emergency window is not of negligible dimensions, as in the above hypothesis, it is not possible to maintain a rigorously constant pressure between the two openings of the holes forming the emergency window. However, correct sizing of these holes and a suitable choice of the flare angle of the first converging portion for entering the siphon 8 make it possible to achieve an acceptable performance in normal operating conditions.

## Claims

1. Intermediate exchanger for a fast nuclear reactor, equipped with an upper tube plate raised above the level of the primary sodium in the reactor vessel, with an input window located above said tube plate and hydraulically linked to the underlying primary sodium by means of an intake siphon which extends below the minimum emergency level of the primary sodium, characterized by the fact that it has a second input window, also called the auxiliary window, smaller than the first, located at the height of the lower end of said siphon.

2. Intermediate exchanger according to claim 1, characterized by the fact that said auxiliary window consists of a series of circumferential arrays of holes made in the outer ring of the exchanger.

3. Intermediate exchanger according to one or more of the foregoing claims, characterized by the fact that said holes in the outer ring are suitably conical in shape, so that they provide a low pressure drop as compared to the flow rate entering the heat exchanger.

4. Intermediate exchanger according to one or more of the foregoing claims, characterized by the fact that the shaped intake siphon, seen on a cross-section on the plane passing through the axis of the exchanger, has a converging initial portion, a narrowed cross-section at the height of the auxiliary window, and a diverging portion downstream from the window itself.

5. Intermediate exchanger according to one or more of the foregoing claims, characterized by the fact that the narrowed neck portion is suitably conical to minimize localized recirculation phenomena.

Fig. 1

Fig. 2

Fig. 3